(19) Europäisches Patentamt
European Patent Office
Office européen des brevets

(11) **EP 4 152 219 A1**

(12) **EUROPEAN PATENT APPLICATION**

(43) Date of publication:
**22.03.2023 Bulletin 2023/12**

(21) Application number: **21306277.1**

(22) Date of filing: **16.09.2021**

(51) International Patent Classification (IPC):
**G06N 10/60** *(2022.01)* **G06N 10/80** *(2022.01)*
**G06N 10/20** *(2022.01)*

(52) Cooperative Patent Classification (CPC):
**G06N 10/60; G06N 10/80;** G06N 10/20

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Bull SAS**
**78340 Les Clayes-sous-Bois (FR)**

(72) Inventors:
- **ALLOUCHE, Cyril**
 **78730 Saint Arnoult en Yvelines (FR)**
- **AYRAL, Thomas**
 **78000 Versailles (FR)**
- **MARTIEL, Simon**
 **78000 Versailles (FR)**
- **GAZDA, Arnaud**
 **78000 Versailles (FR)**

(74) Representative: **Plasseraud IP**
 **66, rue de la Chaussée d'Antin**
 **75440 Paris Cedex 09 (FR)**

(54) **COMPUTING SYSTEM FOR EXECUTING HYBRID QUANTUM/CLASSICAL PROGRAMS**

(57) The present disclosure relates to a computing system (10) for executing hybrid programs, said computing system comprising:
- hardware resources comprising quantum computing resources and classical computing resources (12), said quantum computing resources comprising one or more quantum computers (11);
- software resources to be executed on the hardware resources;

wherein the software resources comprise a plurality of processing modules (32, 33) comprising interfaces of two possible types referred to as upstream interface (30) and downstream interface (31), wherein said plurality of processing modules comprises:
- at least one quantum processing module (32) for each quantum computer, wherein each quantum processing module comprises an upstream interface;
- a plurality of plugin modules (33), wherein each plugin module comprises both an upstream interface and a downstream interface;

wherein a hybrid program is built by connecting at least one plugin module and one quantum processing module.

Fig. 1

EP 4 152 219 A1

**Description**

**TECHNICAL FIELD**

This disclosure relates to quantum computing and relates more specifically to a computing system for executing hybrid programs, i.e. programs that use both classical computing resources and quantum computing resources.

**BACKGROUND ART**

Quantum computing, i.e. using quantum computers, is gaining more and more interest as it is expected to solve some problems way faster than classical computing, i.e. using classical computers. However, some other problems are also solved more efficiently by classical computing, such that there is a need for hybrid architectures, i.e. architectures which use both classical computing resources and quantum computing resources.

An example of hybrid architecture is given by the patent application EP 3425497 A1, in which a classical computer is configured as a master which controls a quantum computer which is configured as a slave.

There exist different quantum computing resources providers, which allow remote access to quantum computers. However, the quantum computers which can be accessed remotely can be different in terms of e.g. number of qubits, connectivity between qubits, available quantum gates, etc. These quantum computers can also be different in terms of underlying quantum computing model, whether quantum gate-based (aka digital quantum computing) or non-quantum gate based (quantum annealing or adiabatic quantum computation, aka analog quantum computing). Currently, a hybrid program is developed specifically for a specific single quantum computer and cannot be reused for another quantum computer.

There is a need for more efficient computing systems that would enable to execute hybrid programs for different quantum computers, without having to redevelop most of a given hybrid program from scratch when there is a need to execute it with a different quantum computer. There is also a need for a computing system that would allow to use heterogeneous quantum computing resources, i.e. quantum computing resources using different quantum computing models (e.g. digital and analog quantum computers) by any hybrid program.

**SUMMARY**

The present disclosure aims at improving the situation. In particular, the present disclosure aims at overcoming at least some of the limitations of the prior art discussed above, by proposing a solution for enabling to build hybrid programs by reusing prior developments.

In specific embodiments, the present disclosure aims at enabling to easily develop hybrid programs for different types of quantum computers, including quantum computers relying on different quantum computing models.

According to a first aspect, the present disclosure relates to a computing system for executing hybrid programs, said computing system comprising hardware resources comprising quantum computing resources and classical computing resources, said quantum computing resources comprising one or more quantum computers, and software resources to be executed on the hardware resources. The software resources comprise a plurality of processing modules comprising interfaces of two possible types referred to as upstream interface and downstream interface, said upstream interface for receiving a job to be executed and for transmitting a result of the execution of the received job, said downstream interface for transmitting a job to be executed and for receiving a result of the execution of the transmitted job. Also, said plurality of processing modules comprises:

- at least one quantum processing module for each quantum computer, wherein each quantum processing module comprises an upstream interface for receiving a job to be executed by said quantum computer;
- a plurality of plugin modules, wherein each plugin module comprises both an upstream interface and a downstream interface;

and a hybrid program is built by connecting at least one plugin module and one quantum processing module.

Hence, the computing system comprises hardware resources which comprise both quantum computing resources and classical computing resources. The computing system comprises also software resources which comprise mainly two types of processing modules. The interfaces of these processing modules are common and can be of two different types. A first type of interface corresponds to an upstream interface and a second type of interface corresponds to a downstream interface. The upstream and the downstream interfaces are symmetric in that:

- the upstream interface receives a job to be executed while the downstream interface transmits a job to be executed;
- the upstream interface transmits a result of the execution of a job while the downstream interface receives a result of the execution of a job.

Hence, any upstream interface of a processing module can be connected to any downstream interface of another processing module, provided that said upstream and downstream interfaces support a same data format for the description of a quantum program included in the job.

A processing module can be replaced by another processing module which uses the same data format(s) on its interface(s). Hence, the architecture of the software resources is highly modular, such that previously developed processing modules can be reused for various hybrid programs.

The processing modules can be of two main types:

- a quantum processing module comprises an upstream interface but does not comprise a downstream interface; a quantum processing module is the software resource which actually communicates with a quantum computer for executing a job received on its upstream interface and for receiving from the quantum computer the corresponding result which is returned on its upstream interface; the software resources preferably comprise at least one quantum processing module for each different quantum computer of the computing system;
- a plugin module comprises both an upstream interface and a downstream interface, such that its downstream interface can be connected to either a quantum processing module or another plugin module using the same data format on its upstream interface.

Hence, a hybrid program can be built by connecting different processing modules, which include at least one quantum processing module and one plugin module. The modularity enables to develop quickly new hybrid programs by reusing existing processing modules, and by developing only a limited number of specific processing modules, which will also be available for future use. A new quantum computer can be easily integrated in the computing system by merely providing the associated quantum processing module, which will also be available for future use for hybrid programs that would need to use this new quantum computer, etc. Also, this modularity makes it easier to use a plurality of hardware resources, since different processing modules can be executed on different hardware resources.

Hence the software resources of the computing system have a serviceoriented architecture, wherein each processing module can be seen as a service performing a specific function, that can be reused by different hybrid programs.

In specific embodiments, the computing system can further comprise one or more of the following features, considered either alone or in any technically possible combination.

In specific embodiments, a hybrid program is built at least by connecting a plurality of plugin modules altogether, by connecting the downstream interface of a plugin module with the upstream interface of another plugin module, and by connecting at least one quantum processing module to the plurality of connected plugin modules, by connecting the downstream interface of a plugin module to the upstream interface of the at least one quantum processing module.

In specific embodiments, the quantum computing resources comprise at least two different quantum computers, and the plurality of processing modules comprise:

- at least two quantum computer-specific quantum processing modules, one for each different quantum computer;
- at least two quantum computer-specific plugin modules, one for each different quantum computer.

In specific embodiments, said at least two quantum computer-specific plugin modules comprise at least two quantum computer-specific quantum compilers.

In specific embodiments, the computing system comprises one or more iterative processing plugin modules, each iterative processing plugin module is configured to iteratively process a result received on the downstream interface to produce an updated job that is output on the downstream interface, until a stop criterion is satisfied, and the result that is output on the upstream interface is determined based on the results received on the downstream interface.

In specific embodiments, at least one iterative processing plugin module is configured to perform a variational quantum eigensolver.

In specific embodiments, the computing system comprises one or more converting plugin modules, and each converting processing plugin module is configured to convert an input job received on the upstream interface into an output job to be output at the downstream interface, and to convert or forward an input result received on the downstream interface into an output result to be output at the upstream interface.

In specific embodiments, the computing system comprises at least one converting plugin module configured to convert an input job received on the upstream interface into a plurality of output jobs to be output at the downstream interface and to convert input results received on the downstream interface into an output result to be output at the upstream interface.

In specific embodiments, at least one converting plugin module is configured to perform error mitigation.

In specific embodiments, the quantum computing resources comprise at least one analog quantum computer configured to execute quantum programs expressed as temporal schedules, and the plurality of processing modules comprises:

- an analog quantum processing module comprising an upstream interface configured to receive a job including a temporal schedule;
- a digital to analog converting, DAC, plugin module comprising an upstream interface configured to receive an input job including a quantum circuit and to convert the input job into an output job including a corresponding temporal schedule, to be output at the downstream interface.

In specific embodiments, the quantum computing resources comprise at least one digital quantum computer configured to execute quantum programs expressed as quantum circuits, and the plurality of processing modules comprises a digital quantum processing module configured to receive an input job including a quantum circuit on its upstream interface such that a same job including a same quantum circuit can be input to said digital quantum processing module and to said DAC plugin module.

In specific embodiments, the quantum computing resources comprise at least one digital quantum computer configured to execute quantum programs expressed as quantum circuits, and the plurality of processing modules comprises:

- a digital quantum processing module comprising an upstream interface configured to receive a job including a quantum circuit;
- an analog to digital converting, ADC, plugin module comprising an upstream interface configured to receive an input job including a temporal schedule and to convert the input job into an output job including a corresponding quantum circuit, to be output at the downstream interface.

In specific embodiments, the quantum computing resources comprise at least one analog quantum computer configured to execute quantum programs expressed as temporal schedules, and the plurality of processing modules comprises an analog quantum processing module configured to receive an input job including a temporal schedule on its upstream interface such that a same job including a same temporal schedule can be input to said analog quantum processing module and to said ADC plugin module.

In specific embodiments, all or part of the hardware resources are cloud computing resources.

In specific embodiments, all or part of the hardware resources are high performance computing, HPC, resources.

## BRIEF DESCRIPTION OF DRAWINGS

The invention will be better understood upon reading the following description, given as an example that is in no way limiting, and made in reference to the figures which show:

- Figure 1: a schematic representation of a computing system according to a preferred embodiment;
- Figure 2: a schematic representation of two different types of processing modules of software resources of the computing system;
- Figures 3 to 7: schematic representations of different examples of plugin modules that may be included in the software resources.

In these figures, references identical from one figure to another designate identical or analogous elements. For reasons of clarity, the elements shown are not to scale, unless explicitly stated otherwise.

## DESCRIPTION OF EMBODIMENTS

As discussed above, the present disclosure relates to a computing system 10 for executing hybrid programs, i.e. programs that use both classical computing resources and quantum computing resources.

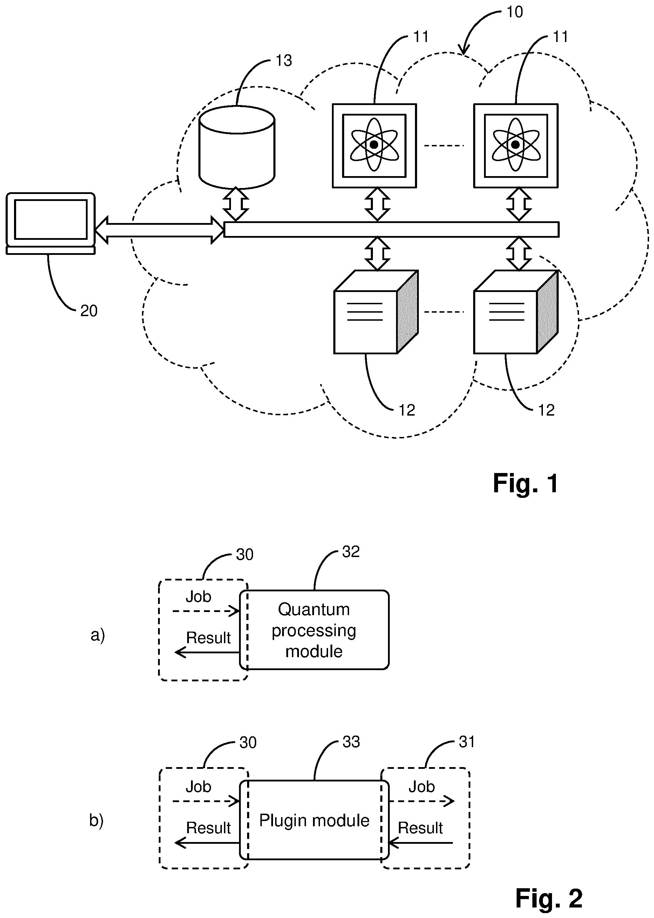

Figure 1 represents schematically a non-limitative example of a computing system 10.

As illustrated by figure 1, the computing system 10 comprises hardware resources. Said hardware resources comprise quantum computing resources and classical computing resources. The quantum computing resources comprise one or more quantum computers 11. The classical quantum computing resources comprise one or more classical computers 12.

In the example illustrated by figure 1, the quantum computing resources comprise a plurality of quantum computers 11. Preferably, at least some of these quantum computers 11 are structurally different. For instance, some of these quantum computers 11 may rely on the same quantum computing model, for instance digital quantum computers, and may differ by the number of qubits, the connectivity between qubits, the quantum gates available, etc. In preferred embodiments, the computing system 10 comprises heterogeneous quantum computers, i.e. quantum computers which rely on different computing models. In other words, the computing system 10 comprises in such embodiments at least one digital quantum computer (i.e. quantum gate-based) and at least one analog quantum computer (i.e. non-quantum gate-based, i.e. quantum annealing or adiabatic quantum computation).

In preferred embodiments, all or part of the hardware resources are cloud computing resources. For instance, all or part of the classical computing resources may be cloud-based. Alternatively, or in combination, all or part of the hardware resources may be high performance computing, HPC, resources. For instance, all or part of the classical computing resources may be HPC-based.

The computing system 10 comprises also software resources to be executed on the hardware resources. In the example illustrated by figure 1, the software resources are stored in a database 13. This database 13 may be stored in a single physical entity or distributed on a plurality of different physical entities. In some cases, the database 13 may be cloud-based or HPC-based.

The hardware resources and the software resources of the computing system 10 may be accessed, for instance remotely, by a client device 20 used by a user willing to develop and execute a hybrid program.

The software resources, e.g. stored in the database 13 in the example of figure 1, comprise a plurality of processing modules 32, 33 that may be used for building hybrid programs.

These processing modules 32, 33 comprise common interfaces of two possible types. A first type of interface corresponds to an upstream interface 30 configured to receive one or more jobs to be executed and to transmit one or more results of the execution of the received job(s). A second type of interface corresponds to a downstream interface 31 configured to transmit one or more jobs to be executed and to receive one or more results of the execution of the transmitted job(s).

In the present disclosure, a job includes a description of a quantum program to be executed together with a description of the measurements to be performed on the quantum state(s) obtained having executed the quantum program, the outcome of these measurements corresponding to the result(s) of the execution of the job.

The description of the quantum program may use different data formats. A first type of possible data format for describing the quantum program corresponds to quantum circuits, usually used for digital quantum computers. A second type of possible data format for describing the quantum program corresponds to temporal schedules (e.g. time-dependent Hamiltonians), usually used for analog quantum computers. A downstream interface 31 of a processing module can be connected to the upstream interface 30 of another processing module provided that said downstream and upstream interfaces support a same data format for describing the quantum program of the job to be executed.

The description of the measurements to be performed may take the form of a number of shots, indicating how many times the execution of the quantum program should be reproduced, or a more complicated task, such as the sampling of a collection of observables which may result in a collection of samples and statistics, etc.

The plurality of processing modules 32, 33 stored in the database 13 comprise two different types of processing modules 32, 33.

A first type of processing module corresponds to a quantum processing module 32 and is represented in part a) of figure 2. As illustrated by part a) of figure 2, a quantum processing module 32 comprises an upstream interface 30 but does not comprise a downstream interface. A quantum processing module 32 is the software resource which actually communicates with a quantum computer 11 for executing a job received on its upstream interface 30 and for receiving the corresponding result which it returns on its upstream interface 30. Such a quantum processing module 32 is executed at least in part by a quantum computer 11, but it can also be partly executed by a classical computer 12 which implements the upstream interface 30 and communicates with a remote or local target quantum computer 11 of the computing system 10 (for instance a in master / slave configuration as described in the patent application EP 3425497 A1).

A second type of processing module corresponds to a plugin module 33 and is represented in part b) of figure 2. As illustrated by part b) of figure 2, a plugin module 33 comprises both an upstream interface 30 and a downstream interface 31, such that its downstream interface 31 can be connected to either a quantum processing module 32 or another plugin module 33 using on its upstream interface the same data format for the quantum program. Such a plugin module 33 is typically executed by one or more classical computers 12 of the classical computing resources.

Hence, a hybrid program can be built by connecting different processing modules 32, 33, which include at least one quantum processing module 32 and one plugin module 33, as will be discussed hereinafter. For instance, a hybrid program may be built e.g. at least by cascading a plurality of plugin modules 33 altogether, by connecting the downstream interface of a plugin module 33 with the upstream interface of another plugin module 33, and by connecting at least one quantum processing module 32 to the plurality of cascaded plugin modules 33, by connecting the downstream interface of the last plugin module 33 in the cascaded chain to the upstream interface of the quantum processing module 32.

Preferably, the software resources of the computing system 10 comprise at least one quantum processing module 32 for each different quantum computer of the quantum computing resources. Such quantum processing modules 32 are quantum computer-specific in that they are configured to interact with different quantum computers 11.

The software resources may also comprise quantum computer-specific plugin modules 33. For instance, plugin modules 33 which perform a quantum compilation are examples of possible quantum computer-specific plugin modules 33, since such quantum compilers typically convert a high level quantum program into a quantum program that is compatible with predetermined hardware constraints of a target quantum computer. For instance, in case of a digital target quantum computer, a quantum compiler will convert a high level quantum circuit into another quantum circuit which comprises only quantum gates available on the digital target quantum computer and which complies which the connectivity between qubits on the digital target quantum computer.

We now describe specific examples of plugin modules 33 which may be used with at least one quantum processing module 32 to build hybrid programs.

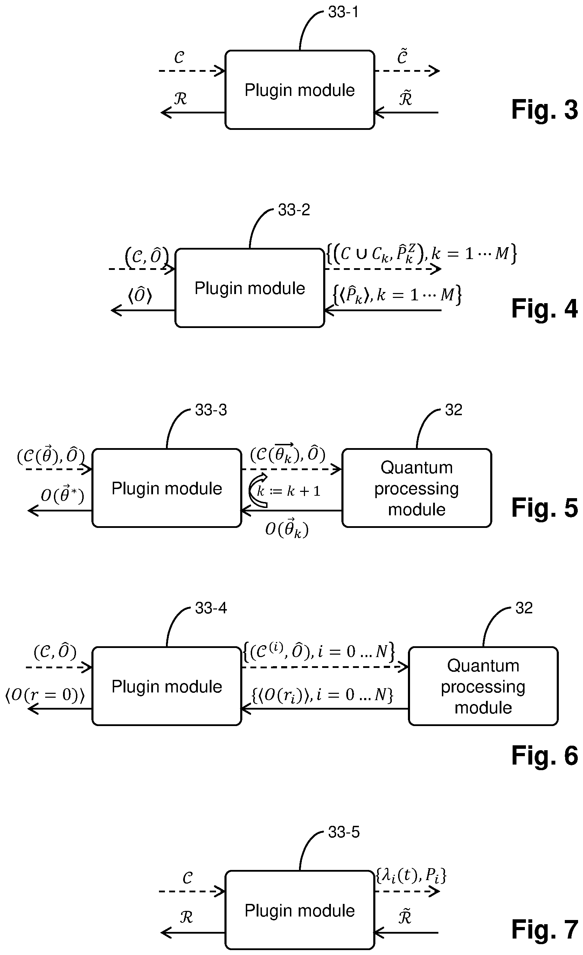

Figure 3 represents schematically an example of plugin module 33-1 which performs quantum compilation, in the case of a digital target quantum computer 11 to be connected to the corresponding quantum processing module 32.

As discussed above, quantum compilation consists in this case in modifying the form of an input quantum circuit into an output quantum circuit that takes into account predetermined hardware constraints of the target quantum computer 11. Quantum compilation may imply rewriting a quantum circuit C into another quantum circuit $\tilde{C}$ that complies with the quantum gates available on the target quantum computer. For instance, trapped-ion quantum computers typically do not accept standard CNOT gates, which need to be replaced by native trapped-ion gates. Also, quantum compilation may imply rewriting a quantum circuit to fulfill the connectivity constraints of a given quantum computer. For instance, qubits in superconducting quantum computers can only be addressed by two-qubit gates if they are neighbors in the two-dimensional grid layout of the qubits. This means that quantum circuits that contain two-qubit gates that involve non-neighboring qubits need to be rewritten. The plugin module 33-1 represented in figure 3 performs such a quantum compilation by receiving a job on its upstream interface that includes the quantum circuit C and by transmitting a job on its downstream interface that includes the optimized quantum circuit $\tilde{C}$ (the description of the measurements to be performed, if any, is simply forwarded from the upstream interface to the downstream interface). Also, the result $\tilde{R}$ received on the downstream interface may be forwarded as such to the upstream interface or it may be converted into a result R (for instance, the qubit indices of the quantum circuit may be permuted when transforming C to $\tilde{C}$ and they may be permuted back in going from $\tilde{R}$ to R so that the quantum compilation is transparent to the user).

Such a quantum compiler plugin module 33-1 is quantum computer-specific and is an example of a converting plugin module 33 configured to convert an input job received on its upstream interface into an output job to be output at its downstream interface, and to convert or forward an input result received on its downstream interface into an output result to be output at its upstream interface.

Figure 4 represents schematically an example of plugin module 33-2 for performing a generic observable measurement.

Most current quantum computers are designed to perform only very simple measurements on the final quantum state of their qubits, that is usually denoted by its ket notation $|\Psi\rangle$. These measurements are most of the time referred to as "Z-axis measurements", i.e. they aim at measuring the following average value:

$$\langle Z_q \rangle = \langle \psi | \hat{Z}_q | \psi \rangle$$

wherein q denotes the qubit index and Z the z-Pauli observable. The physical way to obtain $\langle Z_q \rangle$ is architecture-dependent. It requires several preparations of the quantum state $|\psi\rangle$ because quantum measurement of any observable 0 projects the quantum state in an eigenvector $|\phi_\alpha\rangle$ of 0 with a probability $p_\alpha = |\langle \phi_\alpha | \Psi \rangle|^2$. Therefore, for Z, each measurement i = 1 $\cdots$ $N_{shots}$ projects to the eigenvectors $|0\rangle$ and 11) of Z and yields a value $z_i = 1$ or $z_i = -1$, respectively. The expectation value $\langle Z_q \rangle$ is estimated by averaging over these repetitions:

$$\bar{Z}_q = \frac{1}{N_{shots}} \sum_{i=1}^{N_{shots}} z_i^q$$

with a (squared) statistical standard error:

$$\Delta Z_q^2 = \langle (\bar{Z}_q - \langle Z_q \rangle)^2 \rangle \approx \frac{\sigma^2(z^q)}{N_{shots} - 1}$$

$$\sigma^2(z^q) = \frac{1}{N_{shots}} \sum_{i=1}^{N_{shots}} \left(z_i^q - \bar{Z}_q\right)^2$$

This description can be extended to a multi-qubit version $\hat{Z}_{q1}\hat{Z}_{q2} \cdots \hat{Z}_{qm}$ by replacing $\bar{Z}_q$ by:

$$\overline{Z_{q_1} Z_{q_2} \cdots Z_{q_m}} = \frac{1}{N_{shots}} \sum_{i=1}^{N_{shots}} z_i^{q_1} z_i^{q_2} \cdots z_i^{q_m}$$

Available quantum computers only yield expectations values of observables of the form $\hat{Z}_{q1}\hat{Z}_{q2} \cdots \hat{Z}_{qm}$. Yet, many applications like quantum chemistry or condensed-matter physics require the computation of expectation values of any Hermitian operator 0. Such observables can always be decomposed as follows:

$$\hat{O} = \sum_{k=1}^{M} \lambda_k \hat{P}_k$$

where $\lambda_k \in \mathbb{R}$ and $\hat{P}_k$ is a product of $m_k$ Pauli operators, $\hat{P}_k = \hat{\sigma}_{q_1}^{i_1} \hat{\sigma}_{q_2}^{i_2} \cdots \hat{\sigma}_{q_{m_k}}^{i_{m_k}}$ , with i $\in$ {x, y, z}. By convention, we will denote $\hat{X} = \hat{\sigma}^x$ and so forth.

Quantum computers should thus be able to compute any expectation value of the form $\langle \hat{\sigma}_{q_1}^{i_1} \hat{\sigma}_{q_2}^{i_2} \cdots \hat{\sigma}_{q_{m_k}}^{i_{m_k}} \rangle$ . Hence, products with $\hat{X}$ or $\hat{Y}$ operators are a *priori* excluded because quantum computers only support measurements of products of Z operators. To lift this restriction, one uses the fact that $\hat{X}$ and $\hat{Y}$ operators can be rewritten as:

$$\hat{X} = U_X^\dagger \hat{Z} U_X$$

$$\hat{Y} = U_Y^\dagger \hat{Z} U_Y$$

Hence, measuring $\hat{X}$ on quantum state $|\psi\rangle$ is equivalent to measuring Z on quantum state $U_X|\Psi\rangle$. Hence, the quantum computer can be used to measure $\langle \hat{X} \rangle$ by being fed a job with the original quantum circuit appended with a $U_x$ quantum gate. One ends up with the following algorithm, for each term $\hat{P}_k$ of the decomposition of the observable 0 to be measured:

- append relevant quantum gates to the original quantum circuit (depending on the Pauli terms contained in $\hat{P}_k$);
- send a job to measure $\hat{P}_k^Z = \hat{Z}_{q_1} \hat{Z}_{q_2} \cdots \hat{Z}_{q_m}$ on this modified quantum circuit;
- recover the resulting average $\langle \hat{Z}_{q1}\hat{Z}_{q2} \cdots \hat{Z}_{qm} \rangle$.

The final average value of the observable is then computed as:

$$\langle \hat{O} \rangle = \sum_{k=1}^{M} \lambda_k \langle \hat{P}_k \rangle$$

This algorithmic task can be implemented by the plugin module 33-2 represented in figure 4. This plugin module 33-2 receives on its upstream interface a job (C, $\hat{O}$) which asks for a measurement of 0 on the final quantum state $|\Psi\rangle$ = $U_C|0\rangle^{\otimes n}$ after execution of the quantum circuit C. The received job is converted into a plurality of jobs that are output on its downstream interface $\left\{ \left( C \cup C_k, \hat{P}_k^Z \right) \right.$ , k = 1 $\cdots$ M}, wherein $C_k$ corresponds to the quantum gates needed to transform to the Z-basis. The plurality of jobs may be output on its downstream interface successively or simultaneously or a combination thereof. The plugin module 33-2 receives on its downstream interface a list of M results containing the

values $\langle \hat{P}_k \rangle$. The plugin module 33-2 then sums the received results to obtain the result (0), which is output on its upstream interface.

Hence the combination of the plugin module 33-2 represented in figure 4 with a basic quantum processing module 32 may be viewed as an enhanced quantum processing module 32 which can handle the measurement of any observable and may be connected to other plugin modules 33 if required.

The proposed modular architecture provides for a clear separation between functions, which can be optimized independently. For instance, the optimization of the measurement may be performed by modifying only the plugin module 33-2 of figure 4 without modifying other plugin modules 33 or the quantum processing modules 32. The plugin module 33-2 of figure 4 can be easily connected with e.g. the plugin module 33-1 of figure 3, and with the corresponding quantum processing module 32, in order to build a hybrid program.

Such a generic observable measurement plugin module 33-2 as represented in figure 4 is an example of a converting plugin module 33 configured to convert an input job received on the upstream interface into a plurality of output jobs to be output at the downstream interface and to convert input results received on the downstream interface into an output result to be output at the upstream interface.

Figure 5 represents schematically an example of plugin module 33-3 for performing a variational quantum eigensolver.

The variational quantum eigensolver, VQE, is the main algorithm suited for so-called noisy intermediate-scale quantum, NISQ, computers. Given a quantum circuit $C(\vec{\theta})$ parametrized by a list of parameters $\vec{\theta}$ (usually the angles of rotation quantum gates) and an observable 0, the VQE algorithm seeks to minimize the expectation value $0(0) = \langle \Psi(\vec{\theta}) | \hat{O} | \Psi(\vec{\theta}) \rangle$ using a classical minimization algorithm. The NISQ computer is used to compute 0(0) for given values of the parameters. This hybrid algorithm/program can be described seamlessly in the present architecture by using two processing modules:

- a quantum processing module 32 with the capacity to measure any observable 0 for a given circuit C (this is not the case of every quantum computer, but any quantum computer not endowed with this property can be enhanced by connecting its low-level quantum processing module 32 to the plugin module 33-2 of figure 4);
- a VQE plugin module 33-3 that receives on its upstream interface a parametric job $(C(\vec{\theta}), \hat{O})$ in which the value of $\vec{\theta}$ is not set ($C(\vec{\theta})$ is the description of the parametric quantum program and 0 is the description of the measurements to be performed), and returns on its upstream interface the minimum value $O(\vec{\theta^*})$; using a classical optimization algorithm, the VQE plugin module 33-3 iteratively chooses new values $\vec{\theta_k}$ of the parameters to prepare corresponding jobs $(C(\vec{\theta_k}), \hat{O})$ which are output on its downstream interface, towards the quantum processing module 32; the VQE processing module 33-3 receives the result $O(\vec{\theta_k})$ on its downstream interface which is processed in a conventional manner to make a decision, namely either to output a new job $(C(\vec{\theta_{k+1}}), \hat{O})$ for updated values $\vec{\theta_{k+1}}$ of the parameters (if a predetermined stop criterion is not met), or return the final value $O(\vec{\theta^*})$ which corresponds e.g. to the minimum result value among all the results received for all iterations $k$, $O(\vec{\theta^*}) = \min_k\{O(\vec{\theta_k})\}$ (if the stop criterion is met).

Of course, other VQE-based algorithms can be implemented as plugin modules 33-3, and the choice of a specific VQE-based algorithm corresponds merely to a specific embodiment of the present disclosure. For instance, gradient-based minimizers may be implemented by outputting at each iteration a plurality of jobs which enable to compute at each iteration the local gradient of the function $O(\vec{\theta})$. Also, the ansatz quantum circuit, i.e. $C(\vec{\theta})$, may be iteratively optimized by the VQE plugin module 33-3 (aka adaptive ansatz construction).

As discussed above, the quantum processing module 32 in figure 5 can correspond to the concatenation of a quantum processing module with the generic observable measurement plugin module 33-2 of figure 4. Also, the processing modules 32, 33-3 in figure 5 can further be composed with other plugin modules 33, e.g. a quantum compilation plugin module 33-1 handling parametric quantum circuits (see figure 3).

Such a VQE plugin module 33-3 as represented in figure 5 is a non-limitative example of an iterative processing plugin module 33 configured to iteratively process a result received on the downstream interface to produce an updated job that is output on its downstream interface. The iterations are pursued until a predetermined stop criterion is satisfied, and the result that is output on the upstream interface is determined based on the results received on the downstream interface for all the iterations.

Figure 6 represents schematically an example of plugin module 33-4 for performing error mitigation.

State-of-the-art NISQ computers have error levels above the thresholds required by quantum error correction theory. Nevertheless, algorithms have been proposed to mitigate the effect of errors of NISQ computers. These error mitigation algorithms are all the most important as NISQ computers have high error rates. Thanks to the architecture of the processing modules 32, 33, error mitigation algorithms can be seamlessly integrated in hybrid programs.

For instance, the zero-noise extrapolation algorithm is a known error mitigation algorithm. If we consider a NISQ computer and call r = 1 its current noise level (r is any metric on the noise, normalized to 1 for the noise on the NISQ computer). The goal of this algorithm is to compute the average value 0 of an observable 0 after execution of a quantum circuit C characterized by the unitary operator $U_C$. In the case of a perfect execution (i.e. r = 0), we have:

$$\langle O(r = 0)\rangle = \langle \psi | \hat{O} | \psi \rangle$$

with $|\Psi\rangle = U_C|0\rangle^{\otimes n}$. However, we do not have access to the sought-after (0(r = 0)) value because, in the presence of noise, the measured value is:

$$\langle O(r = 1)\rangle = \mathrm{Tr}[\hat{\rho}(r = 1)\hat{O}]$$

where p(r = 1) is the (mixed) final quantum state of the system after a noisy evolution (the observable 0 is also affected by noise in general, but we neglect this dependence for simplicity). The zero-noise extrapolation algorithm proposes a way to extrapolate from (0(r = 1)) to (0(r = 0)) by artificially increasing the noise level to values $r_i$ such that r < $r_1$ < $r_2$ ..., measuring the corresponding observables $\langle O(r_i)\rangle$ and then performing an extrapolation to the r = 0 limit. In practice, this artificial increase in the noise can be done in several ways. The most straightforward one consists in adding identity operations with a variable duration in the original quantum circuit so that the additional computational time required by the quantum circuit leads to an increased sensitivity to decoherence. This insertion of identity operations can be easily implemented by adding pairs of involutive quantum gates ($U^2 = I$) like pairs of Hadamard or CNOT gates. This method is thus easy to implement with a plugin module 33-4 that receives on its upstream interface a job (C, 0) job as an input, which is converted into a plurality of jobs which are output on its downstream interface:

$$\left\{ (C^{(i)}, \hat{O}), i = 0 \dots N \right\}$$

wherein the quantum circuit $C^{(i)}$ corresponds to the original quantum circuit C with i pairs of involutive quantum gates added at well-chosen places in the quantum circuit (for instance after each two-qubit quantum gate since they are the most error-prone quantum gates). The plugin module 33-4 receives on its downstream interface the corresponding results $\{\langle O(r_i)\rangle, i = 0 \dots N\}$ which are then used by the plugin module 33-4 to extrapolate to the zero noise limit to (0(r = 0)), which is output on its upstream interface by the plugin module 33-4.

Of course, other error mitigation algorithms can be implemented as plugin modules 33-4, and the choice of a specific error mitigation algorithm corresponds merely to a specific embodiment of the present disclosure.

Another non-limitative example relates to assignment probability error mitigation. NISQ computers are particularly prone to assignment errors during readout, namely there is a nonzero probability that a "0" qubit is confused with a "1" (and conversely). Thus, for the single-qubit case, starting from a distribution ($p_0$, $p_1$) for the probabilities of getting 0 or 1, assignment errors alter this distribution to ($\tilde{p}_0$, $\tilde{p}_1$), with:

$$\begin{bmatrix} \tilde{p}(0) \\ \tilde{p}(1) \end{bmatrix} = \begin{bmatrix} p(0|0) & p(0|1) \\ p(1|0) & p(1|1) \end{bmatrix} \begin{bmatrix} p(0) \\ p(1) \end{bmatrix}$$

Thus, a noisy quantum computer with assignment errors will return ($\tilde{p}_0$, $\tilde{p}_1$) instead of ($p_0$, $p_1$). These errors can be mitigated if the so-called assignment error matrix:

$$A = \begin{bmatrix} p(0|0) & p(0|1) \\ p(1|0) & p(1|1) \end{bmatrix}$$

can be estimated. Then, the exact distribution may be recovered from the noisy one by using the following expression:

$$\begin{bmatrix} p(0) \\ p(1) \end{bmatrix} = A^{-1} \begin{bmatrix} \tilde{p}(0) \\ \tilde{p}(1) \end{bmatrix}$$

This error mitigation technique can easily be implemented as a plugin module 33-4. The plugin module 33-4 can start by outputting on its downstream interface a plurality of jobs which are used to compute an estimate of the assignment error matrix *A*. This is done by outputting quantum circuits with *X* gates only and receiving on the downstream interface the output probability, from which the plugin module 33-4 can determine $p(0|1)$ and $p(1|1)$. By outputting on its downstream interface empty quantum circuits, $p(1|0)$ and $p(0|0)$ can be estimated (this can be replicated for each qubit of the quantum computer). Then, the quantum circuit C received on its upstream interface can be output on its downstream interface as a job to be executed, for which the plugin module 33-4 receives the final distribution returned as a result. Using the assignment error matrix A computed, the plugin module 33-4 can compute the distribution corrected for assignment errors and return it as a result on its upstream interface.

The non-limitative examples provided above in reference to figures 3 to 6 relate mainly to digital quantum computers, i.e. quantum computers which can operate discrete quantum gates on their qubits, and which therefore assume that the plugin modules 33 and the quantum processing modules 32 receive jobs which comprise quantum programs expressed as quantum circuits.

However, many quantum computers do not support such a digital operation mode, i.e. they cannot operate discrete quantum gates on their qubits. Instead, they can be controlled by continuous functions. Such quantum computers can be referred to as analog quantum computers. It should be noted that the distinction between analog quantum computers and digital quantum computers relates mainly here on the way they are controlled. Indeed, in practice even digital quantum computers are driven internally in an analog fashion.

The proposed software architecture, based on plugin modules 33 and quantum processing modules 32, can be also used with analog quantum computers, with the same advantages, by e.g. adapting the data format(s) of the quantum program on the upstream and downstream interfaces.

As discussed above, the software architecture relies on upstream and downstream interfaces used to exchange jobs and results. While jobs and results have been mainly discussed for the digital operation mode, we now describe non-limitative examples of how they can be used in the analog operation mode.

The abstract description of an analog quantum program may be represented with a time-dependent Hamiltonian operator (temporal schedule):

$$H(t) = \sum_i \lambda_i(t) P_i$$

with $\lambda_i(t)$ real, time-dependent control fields and $P_i$ products of Pauli operators acting on a variable number of qubits (note that the $P_i$ matrices may also be written in a fermionic and bosonic language, which is relevant for some analog quantum computers). This form captures all Hamiltonians as any Hermitian operator can be described this way.

While in a digital operation mode the job contains a quantum program expressed as a quantum circuit that describes the series of quantum gates to be applied to the qubits, in an analog operation mode, the job can therefore contain a quantum program expressed as a temporal schedule that contains the information about the $\{\lambda_i(t), P_i\}$. Analog quantum computers execute such jobs natively and return a result that is identical to that of digital quantum computers (namely a list of samples or of measurements of observables if the job contains observables to be measured). Hence, the software architecture described can be used with analog quantum computers by e.g. considering jobs comprising quantum programs expressed as temporal schedules. Therefore, all that has been discussed above for digital quantum computers can be applied similarly for analog quantum computers.

Hence in preferred embodiments, the quantum computing resources comprise at least one analog quantum computer 11, associated to a corresponding quantum computer-specific analog quantum processing module 32. Preferably, the quantum computing resources comprise one or more analog quantum computers 11 and one or more digital quantum computers 11.

Also, the proposed software architecture allows to seamlessly connect an analog operation mode to a digital operation mode. Indeed, the proposed software architecture provides a natural way to convert from a digital job (i.e. a job comprising a quantum circuit) to an analog job (i.e. a job containing a temporal schedule), and vice versa.

Figure 7 represents schematically an example of plugin module 33-5 for performing digital to analog conversion, DAC.

The DAC plugin module 33-5 represented in figure 7 receives on its upstream interface a digital job which comprises a quantum circuit C and converts it into an analog job which comprises a temporal schedule which corresponds to a time-dependent Hamiltonian operator $H(t)$ (for instance expressed as $\{\lambda_i(t), P_i\}$). This analog job is output on its downstream interface, e.g. towards the quantum processing module 32 associated to the considered analog quantum computer. Optionally, this DAC plugin module 33-5 may convert the corresponding analog results into digital ones.

This DAC plugin module 33-5 is quantum computer-specific, since the conversion to be applied depends on the analog quantum computer constraints. For instance, a digital job consisting in two gates $U_1$ (duration $t_1$) and $U_2$ (duration $t_2$) will result in a Hamiltonian $H(t) = H_1(t) + H_2(t)$ with $H_1(t) = 0$ for $t_1 < t < t_1 + t_2$ and $H_2(t) = 0$ for $0 < t < t_1$ in

the absence of any simplification or optimization (if the quantum gates act on different qubits, both Hamiltonians could be applied simultaneously instead of sequentially as implied here). The precise form of $H_1(t)$ and $H_2(t)$ depends on the form of $U_1$ and $U_2$ and on the hardware constraints of the analog quantum computer. One must only insure that e.g.

$$U_1 = \exp\left(-\int_0^{t_1} H_1(t)dt\right)$$ (and similarly for $U_2$).

Hence, such a DAC plugin module 33-5 may be used as a gateway between digital and analog frameworks, by performing a conversion of the data format of the job's quantum program.

In particular, thanks to the DAC plugin module 33-5, an analog quantum computer can be programmed by means of quantum circuits, by connecting the DAC plugin module 33-5 to the corresponding analog quantum processing module 32. Also, the computing system can indifferently execute a same quantum circuit on either a digital quantum computer or an analog quantum computer, via the DAC plugin module 33-5.

According to a non-limitative example, in the same way as variational algorithms are useful for digital quantum computers, they can be used with analog quantum computers. The temporal schedule $\{\lambda_i(t), P_i\}$ that describe a quantum program can be regarded as a variational object $\{\lambda_i(\theta, t), P_i\}$ whose parameters $\theta$ are to be optimized to minimize a cost function $\langle O(\theta)\rangle = \langle \Psi(\theta)|\hat{O}|\Psi(\theta)\rangle$, where $|\Psi(\theta)\rangle$ is the final quantum state of the analog quantum computer after execution of the parameterized temporal schedule. Besides naturally guaranteeing that such algorithms can be implemented with an analog quantum computer and a plugin module for optimizing the parameters $\theta$, the present software architecture, and the DAC plugin module 33-5, allows using the same VQE plugin module 33-3 of figure 5 both in a digital and in an analog operation mode (by connecting the VQE plugin module 33-3 with the DAC plugin module 33-5 and the corresponding analog quantum processing module 32).

In preferred embodiments, the DAC plugin module 33-5 may be configured to determine a quantum optimal control of the analog quantum computer from quantum circuits. Indeed, a central challenge consists in optimizing the temporal schedule $\{\lambda_i(t), P_i\}$ in a such a way that the quantum process enacted by it corresponds to a target quantum gate, U. This is referred to as quantum optimal control. Quantum optimal control can be seen as a special case of variational quantum algorithms where the cost function to be optimized is the distance between the actual quantum process $\varepsilon(\theta)$ that a given temporal schedule $\{\lambda_i(\theta, t), P_i\}$ realizes and the target unitary quantum gate U. This distance can in turn be described as a combination of measurable observables, and hence can be evaluated using one or several jobs whose results, after being measured on the target analog quantum computer, will be combined into the final distance cost function, which is used to find better parameters $\theta$. Hence, such an optimization can be performed for each considered quantum gate for determining an optimized temporal schedule for each considered quantum gate. Such an optimization is performed in a preliminary phase, and the optimized temporal schedules are used to convert the quantum circuit C received on the upstream interface.

Similarly, an analog to digital converting, ADC, plugin module (not represented in the figures) may be defined, comprising an upstream interface configured to receive an analog job including a temporal schedule and to convert the analog job into a digital job including a corresponding quantum circuit, to be output at the downstream interface. Hence, thanks to such an ADC plugin module, a digital quantum computer can be programmed by means of temporal schedules, by connecting the ADC plugin module to the corresponding digital quantum processing module 32. Also, the computing system can indifferently execute a same temporal schedule on either an analog quantum computer or a digital quantum computer, via the ADC plugin module. Such an analog to digital conversion can be performed using e.g. a Trotterization process or Trotter decomposition.

Hence, the computing system enables to easily build and execute a complex hybrid program by connecting a plurality of processing modules 32, 33, and to use different types of hardware computing resources in a unified manner. For instance, a hybrid program performing a quantum compilation, a generic observable measurement, error mitigation and a VQE algorithm may be built by connecting altogether the corresponding plugin modules 33 and a quantum processing module 32. These processing modules 32, 33 can be reused for other hybrid programs and can optimized/updated independently one from the other. Building a new hybrid program may therefore reuse existing processing modules 32, 33 while requiring developing from scratch only a limited number of new processing modules 32, 33 (which will be available for future hybrid programs).

It should be noted that, when building a hybrid program, the downstream interface of a given plugin module 33 may be connected to more than one upstream interface of other processing modules 32, 33 (e.g. to execute a same quantum program on different quantum computers, etc.). Also, when building a hybrid program, the upstream interface of a given processing module 32, 33 may be connected to more than one downstream interface of other plugin modules 33 (e.g. to have the returned result post-processed by different plugin modules 33, etc.). The execution of such processing modules 32, 33 may be coordinated e.g. by a main process which monitors the execution of each processing module 32, 33 used as services in the hybrid program.

**Claims**

1. A computing system (10) for executing hybrid programs, said computing system comprising:

   - hardware resources comprising quantum computing resources and classical computing resources (12), said quantum computing resources comprising one or more quantum computers (11);
   - software resources to be executed on the hardware resources;

   wherein the software resources comprise a plurality of processing modules (32, 33) comprising interfaces of two possible types referred to as upstream interface (30) and downstream interface (31), said upstream interface for receiving a job to be executed and for transmitting a result of the execution of the received job, said downstream interface for transmitting a job to be executed and for receiving a result of the execution of the transmitted job; wherein said plurality of processing modules comprises:

   - at least one quantum processing module (32) for each quantum computer, wherein each quantum processing module comprises an upstream interface for receiving a job to be executed by said quantum computer;
   - a plurality of plugin modules (33), wherein each plugin module comprises both an upstream interface and a downstream interface;

   wherein a hybrid program is built by connecting at least one plugin module and one quantum processing module.

2. Computing system (10) according to claim 1, wherein a hybrid program is built at least by connecting a plurality of plugin modules altogether, by connecting the downstream interface of a plugin module with the upstream interface of another plugin module, and by connecting at least one quantum processing module to the plurality of connected plugin modules, by connecting the downstream interface of a plugin module to the upstream interface of the at least one quantum processing module.

3. Computing system (10) according to any one of the preceding claims, wherein the quantum computing resources comprise at least two different quantum computers (11), and the plurality of processing modules comprise:

   - at least two quantum computer-specific quantum processing modules (32), one for each different quantum computer;
   - at least two quantum computer-specific plugin modules (33), one for each different quantum computer.

4. Computing system (10) according to claim 3, wherein said at least two quantum computer-specific plugin modules comprise at least two quantum computer-specific quantum compilers (33-1).

5. Computing system (10) according to any one of the preceding claims, comprising one or more iterative processing plugin modules, wherein each iterative processing plugin module is configured to iteratively process a result received on the downstream interface to produce an updated job that is output on the downstream interface, until a stop criterion is satisfied, and wherein the result that is output on the upstream interface is determined based on the results received on the downstream interface.

6. Computing system (10) according to claim 5, wherein at least one iterative processing plugin module is configured to perform a variational quantum eigensolver (33-3).

7. Computing system (10) according to any one of the preceding claims, comprising one or more converting plugin modules, wherein each converting processing plugin module is configured to convert an input job received on the upstream interface into an output job to be output at the downstream interface, and to convert or forward an input result received on the downstream interface into an output result to be output at the upstream interface.

8. Computing system (10) according to claim 7, comprising at least one converting plugin module configured to convert an input job received on the upstream interface into a plurality of output jobs to be output at the downstream interface and to convert input results received on the downstream interface into an output result to be output at the upstream interface.

9. Computing system (10) according to claim 8, wherein at least one converting plugin module is configured to perform error mitigation (33-4).

10. Computing system (10) according to any one of the preceding claims, wherein the quantum computing resources comprise at least one analog quantum computer configured to execute quantum programs expressed as temporal schedules, and the plurality of processing modules comprises:

    - an analog quantum processing module comprising an upstream interface configured to receive a job including a temporal schedule;
    - a digital to analog converting, DAC, plugin module (33-5) comprising an upstream interface configured to receive an input job including a quantum circuit and to convert the input job into an output job including a corresponding temporal schedule, to be output at the downstream interface.

11. Computing system (10) according to claim 10, wherein the quantum computing resources comprise at least one digital quantum computer configured to execute quantum programs expressed as quantum circuits, and the plurality of processing modules comprises a digital quantum processing module configured to receive an input job including a quantum circuit on its upstream interface such that a same job including a same quantum circuit can be input to said digital quantum processing module and to said DAC plugin module.

12. Computing system (10) according to any one of the preceding claims, wherein the quantum computing resources comprise at least one digital quantum computer configured to execute quantum programs expressed as quantum circuits, and the plurality of processing modules comprises:

    - a digital quantum processing module comprising an upstream interface configured to receive a job including a quantum circuit;
    - an analog to digital converting, ADC, plugin module comprising an upstream interface configured to receive an input job including a temporal schedule and to convert the input job into an output job including a corresponding quantum circuit, to be output at the downstream interface.

13. Computing system (10) according to claim 12, wherein the quantum computing resources comprise at least one analog quantum computer configured to execute quantum programs expressed as temporal schedules, and the plurality of processing modules comprises an analog quantum processing module configured to receive an input job including a temporal schedule on its upstream interface such that a same job including a same temporal schedule can be input to said analog quantum processing module and to said ADC plugin module.

14. Computing system (10) according to any one of the preceding claims, wherein all or part of the hardware resources are cloud computing resources.

15. Computing system (10) according to any one of the preceding claims, wherein all or part of the hardware resources are high performance computing, HPC, resources.

**Fig. 1**

**Fig. 2**

**Fig. 3**

**Fig. 4**

**Fig. 5**

**Fig. 6**

**Fig. 7**

Europäisches
Patentamt

European
Patent Office

Office européen
des brevets

# EUROPEAN SEARCH REPORT

Application Number

EP 21 30 6277

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/365585 A1 (SMITH ROBERT STANLEY [US] ET AL) 20 December 2018 (2018-12-20) * abstract * * paragraph [0018] * * paragraph [0043] * * paragraph [0051] - paragraph [0053] * * paragraph [0089] * * figures 1, 2, 3A * | 1-15 | INV. G06N10/60 G06N10/80 ADD. G06N10/20 |
| X | US 2018/260245 A1 (SMITH ROBERT STANLEY [US]) 13 September 2018 (2018-09-13) * abstract * * paragraph [0015] * * paragraph [0033] * * paragraph [0044] - paragraph [0047] * * paragraph [0053] * * figure 1B * | 1-15 | |

TECHNICAL FIELDS
SEARCHED      (IPC)

G06N

The present search report has been drawn up for all claims

| Place of search | Date of completion of the search | Examiner |
|---|---|---|
| The Hague | 4 March 2022 | Papadakis, Georgios |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 30 6277

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2022

| Patent document cited in search report | | Publication date | Patent family member(s) | | Publication date |
|---|---|---|---|---|---|
| US 2018365585 | A1 | 20-12-2018 | EP | 3642765 A1 | 29-04-2020 |
| | | | US | 2018365585 A1 | 20-12-2018 |
| | | | US | 2021406752 A1 | 30-12-2021 |
| | | | WO | 2018236925 A1 | 27-12-2018 |
| US 2018260245 | A1 | 13-09-2018 | EP | 3593296 A1 | 15-01-2020 |
| | | | US | 2018260245 A1 | 13-09-2018 |
| | | | WO | 2018165607 A1 | 13-09-2018 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3425497 A1